# EUROPEAN PATENT APPLICATION

(11) **EP 1 469 477 A2**
(43) Date of publication of application: **20.10.2004**
(21) Application number: 04252274.8
(22) Date of filing: 17.04.2004
(51) Int. Cl.: G11B 27/10

(54) **Method and data format for synchronizing contents**

(30) Priority: 17.04.2003 KR 2003024469
(71) Applicant: Samsung Electronics Co., Ltd., Suwon-si, Gyeonggi-do (KR)
(72) Inventor: Kang, In-pyo, 247-403 Ssangyong Apt., Suwon-si Gyeonggi-do (KR); Yi, Kyoung-hoon, Seoul (KR); Yoon, Hyun-sik, Seoul (KR); Jeong, Tae-jin, Seoul (KR); Kim, Sae-rin, Seoul (KR); Yoo, Jung-hyun, Seoul (KR)
(74) Representative: Robinson, Ian Michael

(57) **Abstract**

A method and data format for synchronizing contents (330). The method includes a content device (300) downloading the contents (330) from a source device (210), storing synch data (400) required to synchronize the downloaded contents (330), determining a target device (220) by interpreting the synch data (400), and executing the contents (330) though the target device (220). The data format includes SynchTime (410) for defining a time at which contents (330) stored in a content device (300) are executed in a target device (220), SynchAction (420) for defining actions that are required to allow the content device (300) to execute the contents (330) in the target device (220), ContentInfo (430) for defining the kinds of contents (330), PreferenceInfo (440) for defining the basic information of an owner if the owner of the contents (330) exists, and SelectDeviceInfo (450) for defining a certain criterion to select a certain device if a plurality of devices providing the corresponding service exist at the time of synchronization.

## Description

The present invention relates to a method of setting detailed options required for executing contents stored in a first home device through another home device in a home network.

In accordance with prior art technology, since there is no provision for a procedure of systematically defining and managing setting information data on the execution of contents, there is employed a method of performing a process of selecting a device and setting detailed options required for the execution of the contents according to the commands of a user.

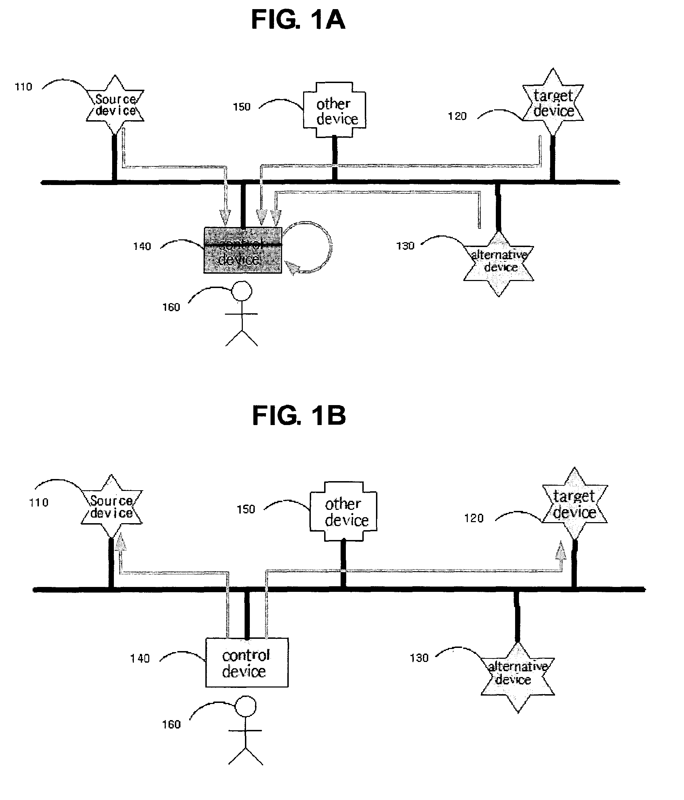

A system, as illustrated in Figure 1A, to which the prior art technology is applied, includes a source device 110 for storing contents, a target device 120 for executing the contents, and a control device 140 for providing the user 160 with an interface that allows the user 160 to control the devices 110 and 120.

The source device 110 is a device that holds contents that are downloaded from external devices and the Internet and are required by the user 160. For example, in the case where the user 160 downloads a desired music file (contents) from a specific place or the Internet and stores the music file in a device, the device, in which the music file is stored, corresponds to the source device 110.

The target device 120 is a device that synchronizes the contents stored in the source device 110 according to the manipulation of the user 160. For example, when the user 160 plays a music file using a music player after the user 160 stores the music file (contents) downloaded from a remote place in the source device 110 of the user 160 and comes home, the music player corresponds to the target device 120.

The control device 140 is a device that provides an interface required for the user 160 to issue a command to transfer the contents stored in the source device 110 to the target device 120. For example, when the user 160 searches for a device holding a desired music file and a device capable of playing the music file, and plays the music file, a device, which provides an interface allowing the user 160 to issue a command to search all the devices of a home for devices fulfilling requirements, corresponds to the control device 140.

In accordance with the prior art technology, contents are executed through the below-described process. A prior art device search method is described with reference to Figure 1A. The user 160 searches for the source device 110 holding contents, e.g., a music file, to be executed, and the target device 120 capable of playing the music file through the use of the control device 140. In this case, the user 160 searches for the desired devices based on a desired service type, a desired device type and content information. If responses arrive from corresponding devices in the above-described operation, device information is collected from these arriving responses. For example, in the Audio/Video (AV) architecture of Universal Plug and Play (UPnP), the user 160 transmits a search message to search for a media server holding contents and a renderer for rendering the contents of the media server through a control point.

A prior art process of a user selecting a device is described with reference to Figure 1B. If there are two or more devices that fulfill service, device and content types desired by the user 160, the user 160 must select one from these devices. At this time, the device selected by the user 160 serves as the target device 120 to execute contents held by the source device 110. Meanwhile, one of the remaining devices not selected by the user 160 becomes an alternative device 130. The target device 120, selected as described above, may be connected to the source device 110.

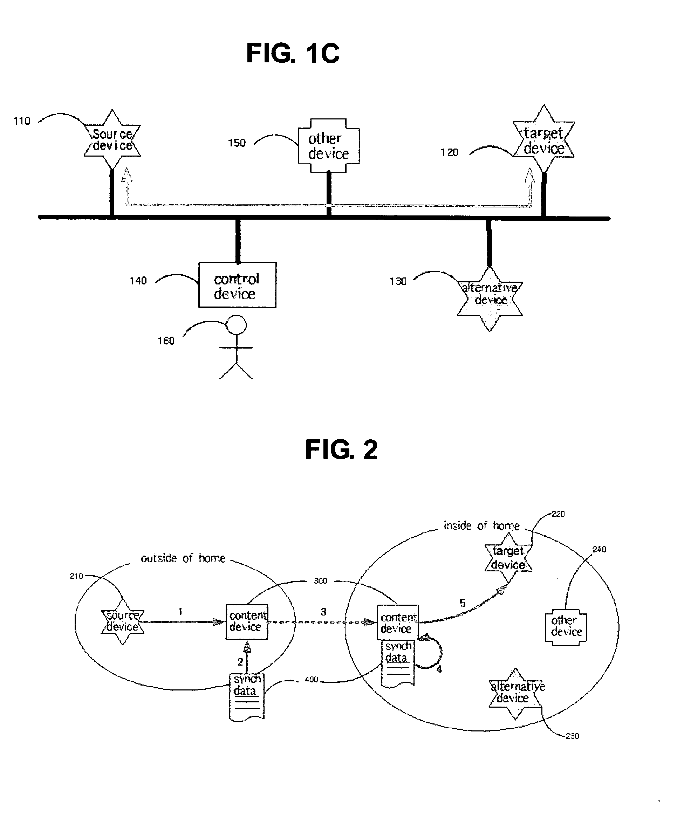

Prior art operations between devices are described with reference to Figure 1C. The user 160 issues a command to execute contents stored in the source device 110 using the target device 120, through the control device 140. The source device 110 and the target device 120 perform corresponding operations according to the command. In this case, while the two devices are operated, the user 160 can instruct the devices to be operated according to desired set conditions. For example, when the user 160 desires to play a music file stored in the source device 110 using the target device 120, the user 160 can set volume, a time for which the music file is to be played, etc.

The prior art is problematic in that the user 160 directly performs contents-related operations itself. That is, if there is a plurality of target devices 120, the user 160 must select one from the target devices 120. Further, the user 160 cannot previously set a time and conditions when and under which the user 160 desires to execute the contents.

The present invention has been made keeping in mind the above problems occurring in the prior art.

According to the present invention there is provided an apparatus and method as set forth in the appended claims. Preferred features of the invention will be apparent from the dependent claims, and the description which follows.

The present invention provides a method, in which a device searches for and selects a target device and executes contents stored in a specific device through the selected target device to comply with information set and preferred by a user at a certain time and under certain conditions without the intervention of the user.

The present invention also provides a method of defining a data format for representing commands to allow devices to be automatically operated, and defining an operation method of each device using the defined data format.

In one aspect, the present invention provides a method for synchronizing contents, comprising the steps of a content device downloading the contents from a source device, storing synch data required to synchronize the downloaded contents, determining a target device by interpreting the synch data, and executing the contents though the target device.

Further, the present invention provides a content device that is provided with contents by a source device and controls the contents to be automatically executed in a target device, comprising a data composer for receiving information required to construct synch data retrieved externally and constructing the synch data, a data parser for interpreting the synch data and transmitting a user command to modules requiring the interpreted synch data, a sync handler for determining conditions for the execution of the contents using the interpreted synch data, and a content processor for issuing an action command to the target device through a service manager if the conditions are fulfilled.

Further still, the present invention provides a synch data structure for storing information required to allow a target device to execute contents at a certain time without the intervention of a user. A system in accordance with the invention comprises SynchTime for defining a time at which contents stored in a content device are executed in a target device, SynchAction for defining actions that are required to allow the content device to execute the contents in the target device, ContentInfo for defining the kinds of contents, PreferenceInfo for defining the basic information of an owner if the owner of the contents exists, and SelectDeviceInfo for defining a certain criterion to select a certain device if a plurality of devices providing the corresponding service exist at the time of synchronization.

For a better understanding of the invention, and to show how embodiments of the same may be carried into effect, reference will now be made, by way of example, to the accompanying diagrammatic drawings in which:
Figure 1A is a schematic diagram showing a process in which a device is searched for by a user in accordance with a prior art;
Figure 1B is a schematic diagram showing a process in which a device is selected by a user in accordance with a prior art;
Figure 1C is a schematic diagram showing operations performed between selected devices in accordance with a prior art;
Figure 2 is a schematic diagram showing a process of synchronizing contents using a synch data according to the present invention;
Figure 3A is a schematic diagram showing a process in which synch data are constructed through a user interface;
Figure 3B is a schematic diagram showing a process in which the synch data are received through a remote storage;
Figure 3C is a schematic diagram showing a process in which the synch data are updated through an operation in conjunction with a target device;
Figure 4 is a schematic diagram showing a process in which a device capable of supporting a service is searched for using content information;
Figure 5 is a schematic diagram showing a process in which a target device is selected using device selection information;
Figure 6 is a schematic diagram showing a process in which contents are synchronized with respect to a target device;
Figure 7 is a diagram showing the entire structure of a content device;
Figure 8A is a diagram showing the detailed structure of a data composer of the content device;
Figure 8B is a diagram showing the detailed structure of a sync handler of the content device;
Figure 8C is a diagram showing the detailed structure of a content processor of the content device; and
Figure 9 is a diagram showing the hierarchical structure of the synch data.

Reference now should be made to the drawings, in which the same reference numerals are used throughout the different drawings to designate the same or similar components.

Figure 2 is a schematic diagram illustrating a method of synchronizing contents using a synch data, according to a preferred embodiment of the present invention. An entire system, to which the method of the present invention is applied, includes a source device 210 for providing contents desired by a user, a content device 300 for receiving the contents, storing the contents and providing the contents to execute the contents, a target device 220 for receiving the contents from the source device 210 and executing the contents, and synch data 400 including preset information for allowing the content device 300 and the target device 220 to automatically execute the contents without intervention by the user.

The operations and functions of the above-described elements are described below in brief. The contents are, for example, data that can be synchronized between two or more devices, such as AV media data, printer script, text, and personal schedule information. The synchronization refers to the transmission of contents from a device to another device and the execution of the contents.

The source device 210 is a device that provides contents desired by the user to the content device. The provided contents include various data, such as music files, print script, schedule information and text. Source devices may exist in various forms depending upon methods of providing contents. For example, in the case where contents are provided via the Internet, a remote server existing on the Internet may be the source device. In the case where contents are provided via a local area network, a personal computer or home server may be the source device. An existing method can be used to move contents between the source device and the content device.

The target device 220 is a device that receives contents desired by the user from the content device and executes the contents. A process of receiving and executing contents is the same as that of prior art technology. That is, when a device needs information, another device provides device and service information thereof, receives a command to execute contents through a service supported thereby, and processes the command. Meanwhile, if there are two or more devices capable of executing contents, one device is selected from the devices as the target device based upon device information defined and desired by the user. In this case, the device, which can execute the contents but is not selected as the target device, may be defined as the alternative device 230, and a device, which is not related to the execution of the contents, may be defined as other device 240.

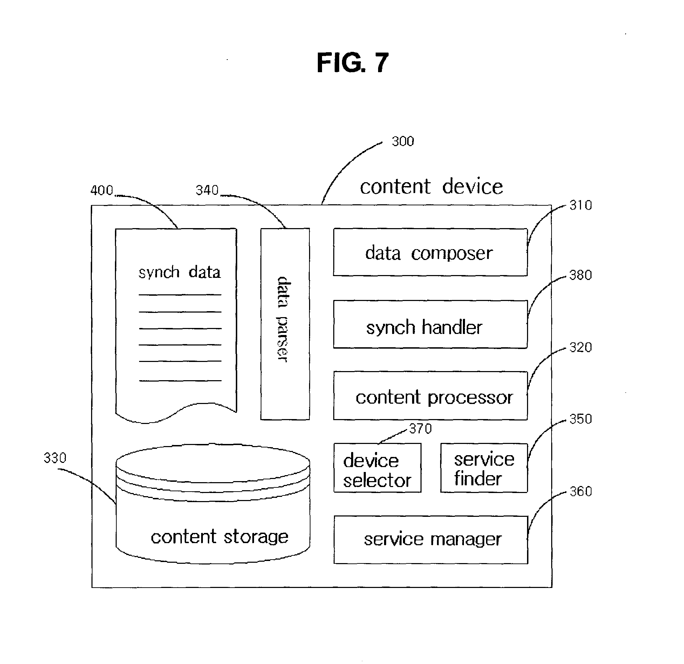

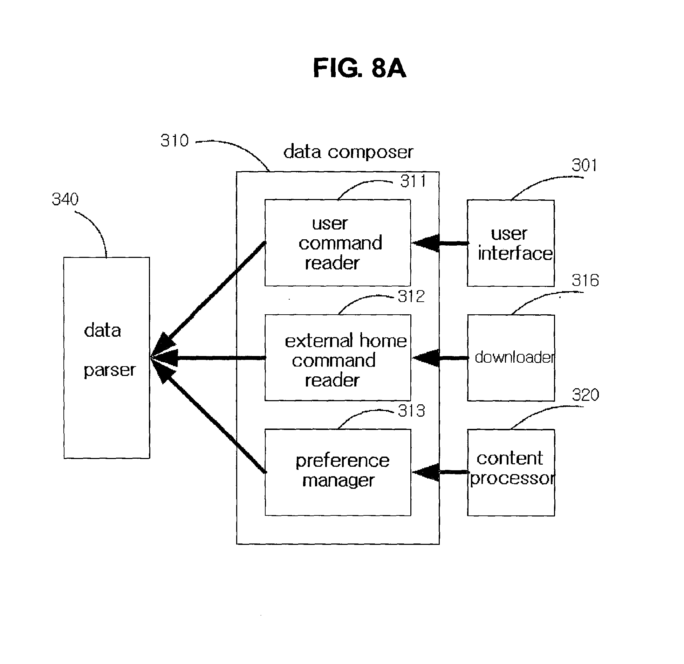

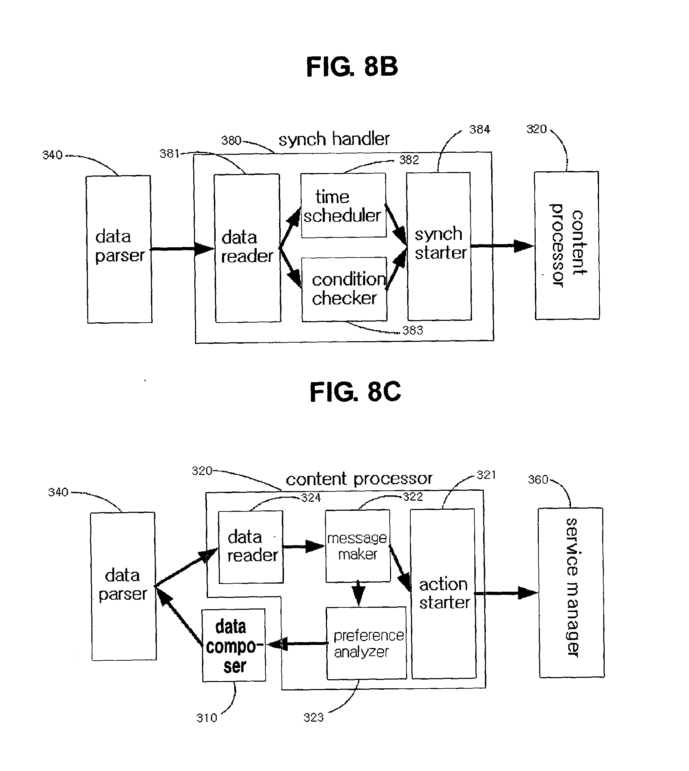

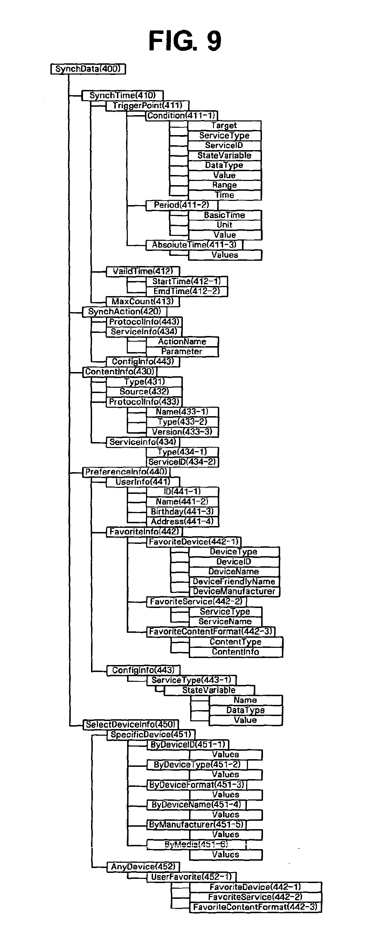

The content device 300 is a device that receives contents from the source device 210 and controls the target device 220 to automatically execute the contents. The synch data are data that include information required to execute contents stored in the content device 300 at a specific time in the target device 220 without intervention by the user. The content device and the synch data are very important elements in regard to the present invention. The content device is described in detail in conjunction with Figures 7, 8A, 8B and 8C, and the synch data are described in detail in conjunction with Figure 9.

The entire operation of the present invention includes five steps. First, contents are downloaded from the source device 210 to the content device 300. This step may be performed on-line or off-line, via a wired or wireless communication. Second, the synch data 400 required to synchronize the downloaded contents are stored. In this case, the user can directly input the synch data or can download previously prepared synch data from an external source. Third, the content device 300 is moved to another location. That is, the user carries the content device 300 to another location. For example, as illustrated in Figure 2, content device is carried from outside the home to inside the home. In this case, the content device 300 can perform synchronization at any location using contents and synch data information. Fourth, the target device is searched for and the synchronization is prepared based upon the synch data constructed by the user. In this case, synchronization time and the target device 220 can be determined based upon the contents of the synch data. Fifth, the contents stored in the content device 300 are executed through the target device 220. The content execution step can be performed by a prior art method.

The content device 300 constructs the synch data 400 required to synchronize downloaded data. The synch data 400, constructed as described above, includes SynchTime 410 for defining the time to execute contents stored in the content device 300 through the target device 220, SynchAction 420 for defining actions to execute contents stored in the content device 300 through the target device 220, ContentInfo 430 that is service information required to execute the contents, SelectDeviceInfo 450 for selecting one device when there are a plurality of devices, and PreferenceInfo 440 that is setting information additionally required when an action command is issued to the target device 220.

Exemplary methods by which the content device 300 obtains synch data information include the following three methods.

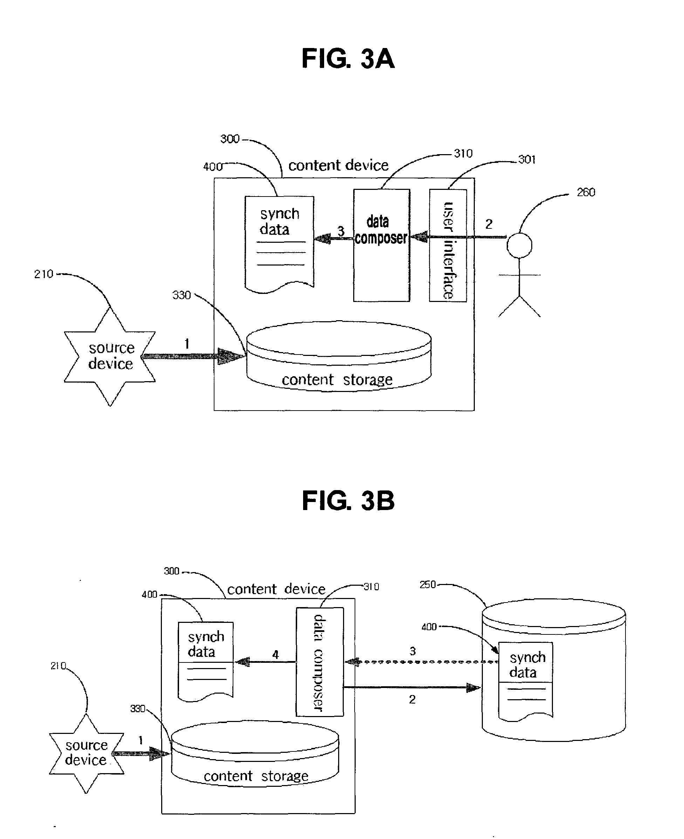

First, a method of constructing synch data using the user interface is described with reference to Figure 3A is disclosed. In this method, a content storage 330 existing in a content device 300 downloads contents from a source device 210 at step 1, a data composer 310 receives information on synch data 400 from the user through the user interface 301 at step 2, and the synch data 400 is constructed at step 3.

Second, a method of constructing synch data using a remote storage with reference to Figure 3B is disclosed. In this method, a content storage 330 existing in a content device 300 downloads contents from a source device 210 at step 1, a data composer 310 accesses a synch data manager 250 that is a remote storage in which synch data are stored at step 2, synch data information, which represent the synchronization information of the contents downloaded from the source device 210, is searched for and downloaded to the content device 300 at step 3, and the synch data information is reflected by the synch data at step 4.

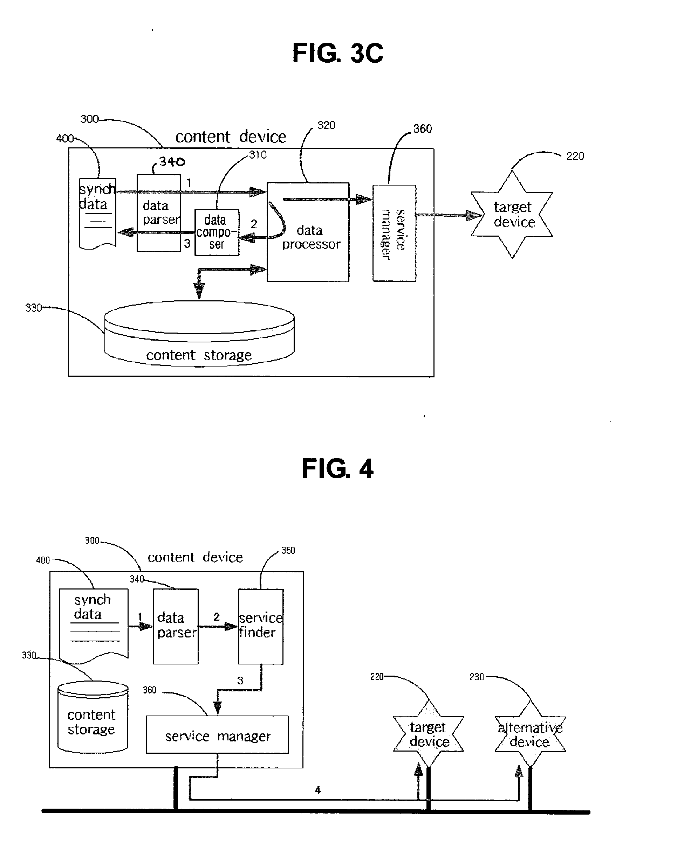

Third, a method of updating synch data through an interaction with a target device with reference to Figure 3C is disclosed. While actions related to the contents are performed between the content device and the target device, the Preference Info of the synch data can be updated by analyzing the pattern of actions at steps 1, 2 and 3. That is, when a content processor 320 executes contents stored in the content storage 330 through the target device 220, the content processor 320 can perform a corresponding action using synch data information at step 1. When the combination of action patterns is transmitted to the data composer 310 at step 2, the data composer 310 can update the synch data at step 3. For example, when it is desired to play a music file (contents) through an audio device (target device), selected audio information, volume and time to play information are collected and can be applied to the ReferenceInfo 440 through the data composer 310.

Processes of searching for a target device, determining a synchronization time using synch data constructed by the user and executing contents through the target device are illustrated in Figures 4, 5 and 6.

Referring to Figure 4, a process of searching for a device capable of supporting a service is described below. When synch data stored in the content device are transmitted to a data parser 340 at step 1, the data parser 340 interprets the synch data and transmits the results of the interpretation to a service finder 350. The service finder 350 searches for devices capable of supporting a corresponding protocol and a corresponding service based upon the results of the interpretation through a service manager 360 at steps 3 and 4.

In the searching process, devices supporting a protocol and a service corresponding to contents are searched for using the Content Info (see 430 in Figure 9). For example, if the contents can be provided through a service defined in the UPnP AV architecture, UPnP is recorded in the ProtocolInfo (see 433 in Figure 9) under the ContentInfo (see 430 in Figure 9), and information on a content directory service, a connection manager service, etc. supported in the UPnP AV architecture are recorded in the ServiceInfo (see 433 in Figure 9). With this process, devices supporting a protocol and a service corresponding to contents are searched for.

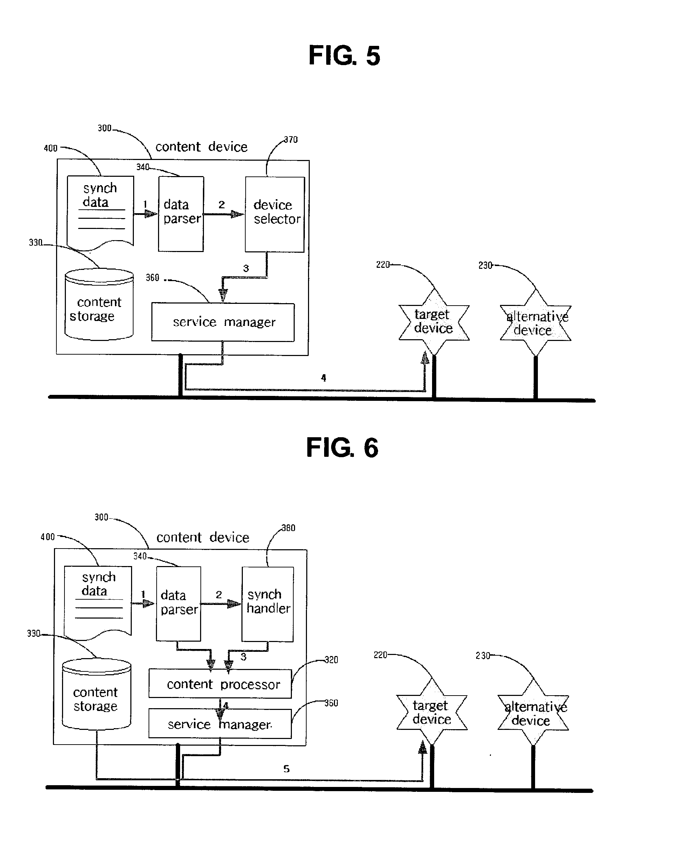

Referring to Figure 5, a process of selecting a target device from searched devices is described below. When synch data stored in the content device are transmitted to a data parser 340 at step 1, the data parser 340 interprets the synch data and transmits the results of the interpretation to a service selector 370. The service selector 370 selects a preferred target device 220 from the searched devices based upon the results of the interpretation through a service manager 360 at steps 3 and 4.

Since the user does not intervene in the selection process, information, which allows the device selector 370 to select the target device 220 using the SelectDeviceInfo (see 450 in Figure 9), is previously stored. In this case, a device, a service and a content format preferred by the user may be defined in the FavoriteInfo (see 442 in Figure 9), and the target device, the service and the content format may be selected based upon this defined information.

Referring to Figure 6, a process of synchronizing contents is described below. After a service and a target device are selected, the execution of the contents is set so that the contents are executed at a specific time desired by the user. To this end, when synch data stored in the content device are transmitted to a data parser 340 at step 1, the data parser 340 interprets the synch data and transmits the results of the interpretation to a sync handler 380 at step 2. The sync handler 380 determines the time, conditions and a period when, under which and for which the contents are executed using the SynchAction (see 420 in Figure 9) of synch data, and notifies a content processor 320 of the determined time, conditions and period at step 3. Thereafter, the content processor 320 determines a protocol, service information and action information required to execute the contents using the SynchAction 420 of the synch data. This information is transmitted to a target device 220 through the service manager 260 at step 4, so that the contents are downloaded from a content storage 330 to the target device 220, or the target device 220 executes the contents from the content storage 330 in real-time at step 5.

Referring to Figure 7, the structure of a content device 300 is described below. The content device 300 includes a data parser 340 for interpreting synch data, transmitting a command of the user to necessary modules, and recording the command of the user transmitted to other modules in the synch data, a data composer 310 for constructing synch data by receiving a synch data-related command from the user through the user interface or exiting synch data from the outside, and correcting the synch data by interpreting executed commands while executing the contents and extracting reference information, a sync handler 380 for determining the time when the contents are executed by interpreting the synch data, a content processor 320 for constructing an action command using the information of the synch data, transmitting the action command to the target device 220 and analyzing the pattern of actions of the user by interpreting the results of actions when the action command is received from the synch handler 380, a service finder 350 for finding a service capable of executing contents using the synch data and searching for a device connected to a network and designed to support the service, a device selector 370 for selecting one consistent with a selection criterion recorded in the synch data when a plurality of devices are selected by the service finder 350, a content storage 330 for storing contents, and a service manager for connecting the contents to the target device to execute the contents using the target device.

In accordance with the present invention, the service manager 360 is a module that serves like the control point of a UPnP system, has functions of actually finding the target device selected by the device finder and the device selector and controlling the target device to execute the action command issued by the content processor 320. The service manager 360 may exist inside the content device, or may exist outside the content device as a separate device.

Referring to Figure 8A, the structure of the data composer 310 of the content device is described below. The data composer 310 includes a user command reader 311 for receiving the command of the user and constructing synch data through the data parser 340, an external home command reader 312 for downloading existing synch data from an external object through a downloader 316 and constructing synch data, and a preference manager 313 for finding the pattern of the execution of contents from the content processor 320 and applying the information of the preference of the user to the synch data.

Referring to Figure 8B, the structure of the synch handler 380 of the content device is described below. The synch handler 380 includes a data reader 381 for interpreting the information of synch data interpreted by the data parser 340, a time scheduler 382 for interpreting time information recorded in the synch data and generating a synchronization event at a corresponding time, a condition checker 383 for interpreting time and event conditions recorded in the synch data and allowing the synchronization event to be generated if the event conditions are fulfilled, and a synch starter 384 for issuing a start command to a content processor 320 so that the content device and the target device can perform contents-related actions if the synchronization event is generated.

Referring to Figure 8C, the structure of the content processor 320 of the content device is described below. The content processor 320 includes a data reader 324 for interpreting the synch data through the data parser 340, a message maker 322 for fetching parameters or information required when a content-related command is transmitted to the target device and constructing an action message, an action starter 321 for transmitting the constructed action message to the target device through the service manager 321, and a preference analyzer 323 for analyzing the pattern of the user by interpreting content-related actions.

The operation of the content processor 320 is described below. When the synch data interpreted by the data parser 340 are read by the data reader 324 and transmitted to the message maker 322, the message maker 322 constructs an action message using the parameters and information required to transmit a command and transmits the constructed action message to the action starter 321. The service manager 360 having received the command to perform the action from the action starter 321 controls the target device to execute contents. Meanwhile, when the message maker 322 transmits the action message to the preference analyzer 323, the preference analyzer 323 analyzes the pattern of actions of the user by interpreting contents-related actions, and transmits the results of the pattern analysis to the data composer 310. Thereafter, the data composer 310 updates the synch data 400 through the data parser 340.

Figure 9 is a diagram showing the hierarchical structure of the synch data 400.

The synch data 400 is data that is used to store information required to cause the target device to execute contents stored in the content device at a specific time without the intervention of the user. These data must be represented to be consistent with a data format that is defined in the present invention to perform synchronization. The basic format of the synch data defined in the present invention is as follows:

The synch data 400 generally includes SynchTime 410, SynchAction 420, ContentInfo 430, PreferenceInfo 440 and SelectDeviceInfo 450.

The SynchTime 410 defines the time to cause the target device to execute contents stored in the content device, and includes TriggerPoint 411 for defining the time to perform synchronization, ValidTime 412 for defining an effective period in which synchronization can be performed, and MaxCount 413 for defining the maximum number of times synchronization is performed.

The SynchAction 420 defines actions required to cause the target device to execute contents stored in the content device, and includes ProtocolInfo 433 for defining protocols required to perform the actions and ServiceInfo 434 for defining services suitable for the actions.

The Content Info 430 includes Type 431 for defining the type of contents stored in the content device, Source 432 for defining the position of content storage 330 in which contents are stored, and ProtocolInfo 433 for defining a protocol required to cause the target device to execute the contents.

The PreferenceInfo 440 includes UserInfo 441 for representing the information of the user who executes contents, and FavoriteInfo 442 for defining devices, services and content formats that the user likes to use.

The Select Device Info 450 includes SpecificDevice 451 for defining information for specifying a device so that the user can previously set information to select one from a plurality of devices if there are the plurality of devices capable of executing corresponding contents, and AnyDevice 452 that is required to select a device using the pattern of actions of the user in the case where a random device is selected.

The TriggerPoint 411 of the SynchTime 410 determines the time to perform synchronization, and is divided into Condition 411 for defining conditions, Period for defining the time interval of execution of synchronization, and AbsoluteTime for defining the absolute time to perform synchronization. The Condition defines the states of a content device and a target device to which synchronization is applied, and includes Target (content device or target device), ServiceType (service including StateVariale for checking states), ServiceID, StateVariable, DataType, Value (a value satisfying the state), Range (below, above, equal), and Time (the pre-time and post-time that satisfy conditions).

The Period defines the time interval at which synchronization is performed based upon BasicTime, and includes BasicTime (24-hour basis, hh:mm), Unit (second, minute, hour, day, week, month) and Value. The AbsoluteTime defines the absolute time to perform synchronization, and includes Value. The Value may be set to various values, and synchronization is performed at the times recorded in the Value.

The ValidTime 412 of the SynchTime 410 defines an effective period in which synchronization can be performed, and includes StartTime that is the start time of the effective period and EndTime that is the end time of the effective period.

The MaxCount 412 of the SynchTime 410 defines the maximum number of times synchronization is performed.

The ProtocolInfo 433 of the SynchAction 420 defines a protocol that performs synchronization, which may be exemplified by UPnP and SynchML.

The ServiceInfo 434 of the SynchAction 420 defines a service that performs actions, which may be exemplified by UPnP AV Service and UPnP Printer Service. There are ActionName and Parameter used to perform the actions as elements.

The ConFigInfo 443 of the SynchAction 420 gives a definition so that, when an action is transmitted, the user transmits the action using preset information. The Type of the ContentInfo 430 defines the types of contents, and the Source of the Content Info 430 defines a local path name to reach contents.

The Protocol Info 433 of the Content Info 430 defines a protocol capable of executing contents, and includes Name, Type and Version. The ServiceInfo 434 of the ContentInfo 430 defines a service capable of execute contents, and includes Type and ServiceID.

The UserInfo 441 of the PreferenceInfo 440 defines the basic information of the user if the owner of contents exists, and includes ID, Name, Birthday and Address. The FavoriteInfo 442 of the Preference Info 440 defines information preferred by the user, and includes FavoriteDevice 442-1, FavoriteService 442-2 and FavoriteContentFormat 442-3. The FavoriteDevice 442-1 defines the information of devices preferred by the user, and includes DeviceType, DeviceID, DeviceName, DeviceFriendlyName, and DeviceManufacturer. The FavoriteDevice 442-2 defines the information of services preferred by the user, and includes ServiceType and ServiceName. The FavoriteContentFormat 442-3 defines the types of contents preferred by the user, and includes ContentType and ContentInfo.

The ConfigInfo 443 of the PreferenceInfo 440 is information in which information on the preference of the user is previously set at the time of synchronization, defines a corresponding service using ServiceType 443-1, and defines Name, DataType and Value under StateVariable.

The SelectDeviceInfo 450 defines a selection criterion to select a device from a plurality of devices if the plurality of devices providing a service exist when synchronization is performed. The selection criterion employs a method in which the user appoints a device or a method of appointing a device with reference to the preference of the user.

The SpecificDevice 451 of the SelectDeviceInfo 450 defines information to previously appoint a device that the user will operate. The user can appoint a specific device using ByDeviceID, ByDeviceType, ByContentFormat, ByFriendlyName, ByManufacturer and ByMedia.

The AnyDevice 452 of the SelectDeviceInfo 450 functions to select a device if a device appointed by the user does not exist. A device that supports the device, the service and the content format preferred by the user using UserFavorite 452-1 can be selected first.

The operation of the embodiment constructed as described above is described with reference to an example.

An example in which the user downloads music to his own content device via the Internet is cited as a first example. In order to use the downloaded music as a morning call, after the music is downloaded, synch data may be constructed as described below through the user interface of a content device.
(1) SynchTime (410). TriggerPoint (411) Period (411-2) =Basic Time=06:00, Unit=Day, Value=1.
(2) SynchActin(420).ProtocolInfo(433) = UPnP, ServiceInfo (434) = ContentDirectory Service, AVTransport Service.
(3) ContentInfo(430).Source(432)= getting-up.mp3
(4) PreferenceInfo(440).ConfigInfo(443).ServiceType(443 1) =Name=Volume, Value=5
(5) SelectDeviceInfo(450).SpecificDevice(451).ByDeviceTyp e(451-1). Value =Audio.
(6) PreferenceInfo(440).FavoriteInfo(442).FavoriteDevice (442-1) .DeviceType =Audio.

In the case where the synch data are constructed by the input of the user as descried above, the data are stored in the content device. Then, the content device can determine when the synchronization is performed in the target device based upon the above-described synch data.

The time when the synchronization is performed can be determined by (1). That is, a corresponding action is performed at 06:00 every day.

A protocol and a service to be performed at a corresponding time are determined by (2). That is, the UPnP protocol is used, and devices performing the ContentDirectory Service and the AVTransport Service are first searched for.

If a plurality of devices fulfilling the conditions of (2) have been searched for, one device must be selected from the plurality of devices. One device is selected using the information defined by (5). That is, since the user inputs the information to execute contents through a device having the DeviceType of Audio, an audio device is selected from the plurality of devices.

The contents to be executed are determined by (3). Therefore, a getting-up.mp3 file is played by the protocol and the service defined by (2).

In the process of executing the contents according to (4), the contents can be executed according to a predetermined value. That is, the content device can set volume to 5 to operate the target device.

The content device can store the Type of a device preferred by the user as history information. Like (6), Audio can be recorded as the DeviceType preferred by the user.

Through the above-described process, the getting-up.mp3 file can be played by the audio device at 6 a.m. every day using the UPnP protocol and service.

Another example, in which a manufacturer producing and selling printers uploads synch data onto a specific Web site to manage the printers and the synch data are provided to the printers, is cited as a second example. Through this service, a printer installed in a home may access the Web site recorded in the memory thereof and can fetch the synch data provided by the manufacturer. In this case, the printer can be the content device.

The synch data constructed by the manufacturer are as follows:
(1) SynchTime(410).TriggerPoint(411).condition(411-1) =Target= Content Device, StateVariable=TonerRemainder, Value=LOW, Range=below
(2) SynchActin(420).ProtocolInfo(433) = RDS
(3) ContentInfo(430).ProtocolInfo(433).Name(433-1)= RDS,C ontentInfo(430).ServiceInfo(434).Type(434-1) =TonerRemainder
(4) SelectDeviceInfo(450).SpecificDevice(451).ByDeviceNam e=RDSServer

The printers perform the following actions using the Synch data constructed by the manufacturer.

Each of the printers determines the time to perform synchronization using (1). That is, when the amount of toner is less than LOW, the action starts.

The protocol used to perform the action is determined using (2). That is, it is determined that the action is performed using RDS (protocol for managing the printers).

The target device for performing the action is determined using (4). That is, a RDS server is selected as the target device.

The contents to be transmitted to the target device are determined using (3). That is, the current state of the toner is reported to the target device by transmitting the state of TonerRemainder, that is, one of Types defined by the RDS, to the target device. Through this process, when the amount of toner of the printer is reduced, the printer can transmit the current state thereof to the server that manages the printer.

Although the present invention has been described by using the preferred embodiment, the present invention is not limited to the embodiment, but various modifications can be made by those skilled in the art without departing from the inventive concept of the present invention.

A device in accordance with the present invention can previously construct data in which the command and preferences of the user can be previously defined, so that the target device is allowed to execute contents stored in the content device at a specific time without the intervention of the user.

In detail, the present invention has effects in which the following items are automatically performed without the intervention of the user. First, the device that supports the service capable of executing contents stored in the content device can be searched for. Second, if two or more devices capable of performing a corresponding service exist, one device can be selected using device information defined by the user or information on the device preferred by the user. Third, contents stored in the content device can be executed using the target device at a certain time by detecting certain conditions, a time or a period preferred by the user. Four, when contents are executed by the target device, the target device can be controlled using information previously set by the user. Finally, preference information can be updated by analyzing execution methods and setting information based upon the information of contents executed through the content device and the target device.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of synchronizing contents, wherein contents are provided by a source device (210), synch data (400) corresponding to the contents (330) are interpreted, and an action command is issued to a target device (220) if conditions for execution of the contents (330) are fulfilled.

2. The method as set forth in claim 1, comprising:
providing a content device (300) located at a first location with the contents (330) by the source device (210);
storing the synch data (400) required to synchronize the provided contents (330);
determining the target device (220) and conditions for execution of the contents (330) by interpreting the synch data (400); and
executing the contents (330) through the target device (220) if the conditions are satisfied.

3. The method as set forth in claim 2, further comprising a user (260) moving the content device (300) to a second location after downloading the contents (330) from the source device (210).

4. The method as set forth in claim 2 or 3, wherein the step of storing the synch data (400) comprises:
receiving information required to construct the synch data (400) from an external source; and
a data composer (310) constructing the synch data (400) using the received information.

5. The method as set forth in claim 4, wherein the step of receiving the information further comprises receiving the information directly from the user (260) though a user interface (301).

6. The method as set forth in claim 4 or 5, wherein the step of receiving the information further comprises receiving the information from an external server.

7. The method as set forth in claim 4, 5 or 6, wherein the step of receiving the information further comprises receiving the information using results obtained by interpreting a pattern of actions performed between the content device (300) and the target device (220).

8. The method as set forth in any of claims 2 to 7, wherein the step of determining the target device (220) comprises:
searching for devices capable of supporting a service consistent with the contents (330); and
selecting the device from the searched devices.

9. The method as set forth in claim 8, further comprising determining remaining ones of the devices, which are not selected as the target device (220), for alternative devices.

10. The method as set forth in claim 8 or 9, wherein the step of searching for the devices comprises:
interpreting the synch data (400) through a data parser (340); and
searching for the devices capable of supporting corresponding protocol and service based upon the interpreted synch data (400) through a service finder (350).

11. The method as set forth in claim 8, 9 or 10, wherein the step of selecting the target device (220) comprises:
interpreting the synch data (400) through the data parser (340); and
selecting the target device (220) from the searched devices based upon the interpreted synch data (400) through the device selector.

12. The method as set forth in any of claims 2 to 11, wherein the step of executing the contents (330) comprises:
a data parser (340) interpreting the synch data (400);
a sync handler (380) determining conditions for execution of the contents (330) using the interpreted synch data (400);
the sync handler (380) transmitting the determined conditions for execution of the contents (330) to a content processor (320); and
the content processor (320) executing the contents (330) through a service manager (360).

13. The method as set forth in claim 12, wherein the step of determining the conditions for execution of the contents (330) comprises:
receiving the interpreted synch data (400) from the data parser (340);
receiving the received synch data (400) and determining a time when the contents (330) are executed;
receiving the received synch data (400) and determining the conditions for execution of the contents (330); and
issuing a start command to a content processor (320) if the time and conditions are fulfilled.

14. The method as set forth in claim 12 or 13, wherein the step of executing the contents (330) comprises:
receiving the interpreted synch data (400) from the data parser (340);
constructing an action message using the interpreted synch data (400); and
transmitting the action message to the target device (220) using the service manager (360).

15. The method as set forth in claim 14, wherein the step of executing the contents (330) further comprises:
analyzing preferences regarding a device, a service and a content format by analyzing the constructed action message; and
recording information on the analyzed preferences and returning the analyzed preferences to the data parser (340).

16. A content device comprising:
a data composer (310) operable to receive information required to construct synch data (400) from an external source and construct the synch data (400);
a data parser (340) operable to interpret the synch data (400) and transmit a user command to modules requiring the interpreted synch data (400);
a sync handler (380) operable to determine conditions for execution of the contents (330) using the interpreted synch data (400); and
a content processor (320) operable to issue an action command to the target device (220) through a service manager (360) if the conditions are fulfilled.

17. A content device as set forth in claim 16, wherein contents (330) are provided thereto by a source device (210), synch data (400) corresponding to the contents (330) are interpreted, and an action command is issued to a target device (220) if conditions for execution of the contents (330) are fulfilled.

18. The content device as set forth in claim 17, further comprising:
a device finder operable to search for devices capable of supporting a corresponding protocol; and
a device selector operable to select one or more of the devices found by said device finder.

19. The content device as set forth in claim 17 or 18, further comprising a data storage operable to store the synch data (400).

20. The content device as set forth in claim 17, 18 or 19, wherein the data composer (310) comprises:
a user command reader (311) operable to construct the synch data (400) by interpreting information received through a user interface (301);
an external data reader (312) operable to interpret information provided by an external server and constructing the synch data (400); and
a reference manager (313) operable to interpret information, which is obtained by analyzing a pattern of actions between the content device (300) and the target device (220), provided by the content processor (320) and updating the synch data (400).

21. The content device as set forth in any of claims 17 to 20, wherein the sync handler (380) comprises:
a data reader (381) operable to receive the interpreted synch data (400) from the data parser (340);
a time scheduler (382) operable to receive the received synch data (400) and determine a time when the contents (330) are executed;
a condition check (383) operable to receive the received synch data (400) and determine conditions for execution of the contents (330); and
a sync starter (384) operable to issue the action command to the content processor (320) if the time and conditions are fulfilled.

22. The content device as set forth in any of claims 17 to 21, wherein the content processor (320) comprises:
a data reader (324) operable to receive the interpreted synch data (400) from the data parser (340);
a message maker (322) operable to construct an action message using the interpreted synch data (400); and
an action starter (321) operable to transmit the action message to the target device (220) through the service manager (360).

23. The content device as set forth in claim 22, wherein the content processor (320) further comprises:
a preference analyzer (323) operable to analyze preferences regarding a device, a service and a content format by analyzing the constructed action message.

24. A system for synchronizing contents, comprising:
a source device (210) operable to provide contents (330) desired by a user (260);
a content device (300) operable to receive the contents (330) from the source device (210) and control the target device (220) to automatically execute the contents (330); and
a target device (220) operable to receive the contents (330) desired by the user (260) and execute the contents (330).

25. The system as set forth in claim 24, wherein the content device (300) comprises:
a data composer (310) operable to receive information required to construct synch data (400) from an outside and contruct the synch data (400);
a data parser (340) operable to interpret the synch data (400) and transmit a user command to modules requiring the interpreted synch data (400);
a sync handler (380) operable to determine conditions for execution of the contents (330) using the interpreted synch data (400); and
a content processor (320) operable to issue an action command to the target device (220) through a service manager (360) if the conditions are fulfilled.

26. The system as set forth in claim 24 or 25, further comprising a device finder operable to locate one or more devices and a device selector operable to select at least one of the found devices.

27. The system as set forth in claim 24, 25 or 26, further comprising a data storage operable to store the synch data (400).

28. The system as set forth in any of claims 24 to 27, wherein the data composer (310) comprises:
a user command reader (311) operable to construct the synch data (400) by interpreting information received through a user interface (301);
an external data reader (312) operable to interpret information provided by an external server and construct the synch data (400); and
a reference manager (313) operable to interpret information, which is obtained by analyzing a pattern of actions between the content device (300) and the target device (220), provided by the content processor (320) and update the synch data (400).

29. The system as set forth in any of claims 24 to 28, wherein the sync handler (380) comprises:
a data reader (381) operable to receive the interpreted synch data (400) from the data parser (340);
a time scheduler (382) operable to receive the received synch data (400) and determine a time when the contents (330) are executed;
a condition check (383) operable to receive the received synch data (400) and determine conditions for execution of the contents (330); and
a sync starter (384) operable to issue the action command to the content processor (320) if the time and conditions are fulfilled.

30. The system as set forth in any of claims 24 to 29, wherein the content processor (320) comprises:
a data reader (324) operable to receive the interpreted synch data (400) from the data parser (340);
a message maker (322) operable to construct an action message using the interpreted synch data (400); and
an action starter (321) operable to transmit the action message to the target device (220) through the service manager (360).

31. The system as set forth in any of claims 24 to 30, wherein the content processor (320) further comprises:
a preference analyzer (323) operable to analyze preferences regarding a device, a service and a content format by analyzing the constructed action message.

32. A synch data structure operable to store information required to allow a target device (220) to execute contents (330) at a certain time without intervention of a user (260), comprising:
SynchTime (410) operable to define a time at which contents (330) stored in a content device (300) are executed in a target device (220);
SynchAction (420) operable to define actions that are required to allow the content device (300) to execute the contents (330) in the target device (220);
ContentInfo (430) operable to define kinds of contents (330);
PreferenceInfo (440) operable to define basic information of an owner if the owner of the contents (330) exists; and
SelectDeviceInfo (450) operable to define a certain criterion to select a certain device if a plurality of devices providing the corresponding service exist at a time of synchronization.

33. The synch data structure as set forth in claim 32, wherein the SynchTime (410) comprises:
TriggerPoint (411) operable to define a time when synchronization is performed;
ValidTime (412) operable to define an effective period for which the synchronization can be performed; and
MaxCount (413) operable to define a maximum number of times the synchronization is performed.

34. The synch data structure as set forth in claim 32 or 33, wherein the SynchAction (420) comprises:
ProtocolInfo (433) operable to define a protocol by which synchronization is performed;
ServiceInfo (434) operable to define a service that performs the action; and
ConFigInfo (443) operable to define definition so that the action is transmitted using information previously set by the user (260).

35. The synch data structure as set forth in claim 32, 33 or 34, wherein the Content Info (430) comprises:
Type (431) operable to define types of the contents (330);
Source (432) operable to define a position and a file name where and with which the contents (330) are stored;
Protocol Info (433) operable to define a protocol by which synchronization is performed; and
ServiceInfo (434) operable to define a service that performs the action.

36. The synch data structure as set forth in claim 32, wherein the PreferenceInfo (440) comprises:
UserInfo (441) operable to define the basic information of the owner;
FavoriteInfo (442) operable to define information of a device, a service and a content format preferred by the user (260); and
ConFigInfo (443) operable to previously set preference information of the user (260) at a time of the synchronization.

37. The synch data structure as set forth in claim 32, wherein the SelectDeviceInfo (450) comprises:
SpecificDevice (451) operable to make a definition to previously designate a device that is operated by the user (260); and
AnyDevice (452) operable to define a method to select a certain device if there is no device designated by the user (260).

38. A recording medium, wherein the synch data structure of any one of claims 32 to 37 is stored in a computer-readable format.
